# FASCICULE DE BREVET EUROPEEN

(11) **EP 0 467 744 B1**
(45) Date de publication et mention de la délivrance du brevet: **13.09.1995**
(21) Numéro de dépôt: 91401883.3
(22) Date de dépôt: 08.07.1991
(51) Int. Cl.: H04L 12/413

(54) **Procédé et agencement de transmission par bus**
Verfahren und Vorrichtung zur Busübertragung
Procedure and apparatus for transmission by bus

(30) Priorité: 10.07.1990 FR 9008750
(43) Date de publication de la demande: 22.01.1992
(73) Titulaire: ALCATEL BUSINESS SYSTEMS, F-75008 Paris (FR)
(72) Inventeur: Gass, Raymond, F-67150 Erstein (FR)
(74) Mandataire: Weinmiller, Jürgen

(56) Documents cités:
- EP-A- 0 122 765
- EP-A- 0 294 133
- US-A- 4 768 189
- US-A- 4 899 143

## Description

L'invention concerne un procédé et un agencement de transmission mettant en oeuvre un bus qui interconnecte une pluralité d'équipements ayant à communiquer entre eux par l'intermédiaire de cellules obtenues par groupement d'octets relevant de canaux de transmission, soit isochrones, soit asynchrones et qui comporte plusieurs liaisons multiplexes temporelles auxquelles chaque équipement est relié.

Dans une forme classique d'interconnexion entre équipements, ceux-ci comportent chacun une unité émettrice-réceptrice et les unités émettrices-réceptrices de tous ces équipements sont reliées à un même bus éventuellement dupliqué.

Un processus d'attribution de priorité régit les émissions des diverses unités sur le bus, ces émissions se succédant en fonction des besoins respectifs des équipements et dans le cadre d'une organisation de transmission temporelle déterminée.

De telles organisations sont par exemple définies par la recommandation G.704 du Comité Consultatif International Télégraphique et Téléphonique (CCITT) qui prévoit différentes structures de trame synchrone destinées à assurer le transfert de signaux numériques arrangés sous forme d'octets sur une liaison exploitée en temps partagé. Les éléments binaires constituant les signaux qui sont successivement émis par les différentes unités émettrices, sont transmis en série par la liaison.

De manière connue, les structures évoquées ci-dessus sont exploitées pour la transmission d'octets correspondant à des signaux produits par des agencements de multiplexage MIC primaire, classiques, appliquant la recommandation G.732 du CCITT pour en particulier la transmission des signaux de parole par des canaux isochrones, au rythme d'un octet par canal et par trame, après échantillonnage et codage de ces signaux de parole sous forme d'octets.

Un canal isochrone permet par exemple la transmission des signaux de parole codés relatifs à l'un des deux sens de transmission d'une communication entre deux postes téléphoniques.

Ces structures permettent aussi de transmettre des octets, relatifs à des informations présentées sous forme numérique et groupées en cellules, c'est-à-dire en paquets comportant un nombre fixe d'octets, ces derniers sont alors transmis dans des intervalles de temps préférablement successifs des trames. Un canal asynchrone est alors formé par la succession d'intervalles de temps exploités pour l'envoi d'une ou de plusieurs cellules successives d'un paquet par une unité.

Il est connu de transmettre des octets de canaux isochrones et des octets de cellules au cours des mêmes trames sur une même liaison en profitant des intervalles de temps laissés libres par les canaux isochrones au cours des trames successives pour transmettre en série, octet par octet, une cellule après l'autre.

Les agencements de transmission à liaison unique ou dupliquée de ce type conviennent bien lorsque le débit numérique est relativement limité, si la transmission s'effectue par voie électrique, le nombre et les débits respectifs des unités raccordées étant en adéquation avec les possibilités offertes par le matériel choisi pour l'agencement et par l'organisation retenue.

Toutefois pour obtenir les débits numériques exigés par certains ensembles, il est connu d'interconnecter les équipements par un agencement de transmission dont le bus est constitué de "p" liaisons identiques, en parallèle. Chacun des équipements dispose alors temporairement de la totalité des "p" liaisons pour émettre des données par groupes de "p".

L'attribution temporaire des liaisons aux équipements d'un même agencement pour leurs besoins de transmission s'effectue alors, préférablement, à la demande si ces besoins varient en cours d'exploitation; de telles variations se produisent par exemple lorsque les équipements sont des éléments constitutifs d'un commutateur d'un réseau numérique à intégration de services.

Une solution d'attribution temporaire connue consiste à déléguer les responsabilités d'attribution du bus à un maître, qui est éventuellement incorporé dans l'un des équipements, qui reçoit les demandes d'attribution et qui est chargé d'arbitrer les éventuels conflits d'accès. Ceci n'est pas totalement satisfaisant sur le plan de la sécurité dans la mesure où pour pallier toute défaillance du maître susceptible de bloquer l'agencement de transmission, il est classique de dupliquer ou même préférablement de tripliquer ce maître et les moyens qui lui permettent de communiquer avec les autres équipements.

La solution devient alors complexe, coûteuse et de moins en moins fiable.

Une autre solution consiste à faire résoudre les problèmes d'attribution temporaire du bus aux équipements désireux d'émettre par ces équipements eux-mêmes.

Une structure de contention commune à tous les équipements interconnectés permet par exemple l'échange d'informations spécifiques de contention destinée à permettre l'attribution successive du bus à chacun des équipements en attente d'émission, en fonction des besoins et contraintes propres à ces équipements, au bus et plus généralement à l'ensemble desservi.

Un procédé de contention utilisant une telle structure est décrit dans le document EP-A-0122765. Il prévoit que des équipements désireux de transmettre par cellule sur une liaison, se portent simultanément sur cette liaison pour y émettre conjointement et bit par bit un module de résolution de contention, à partir de leurs priorités individuelles respectives, traduites sous forme binaire prédéterminée. Les équipements les moins prioritaires s'éliminent au premier bit de module de résolution de contention qu'ils recoivent et qui ne correspond plus à celui qu'ils ont émis. L'équipement autorisé à émettre une cellule sur la liaison, jusqu'alors soumise à contention, est celui qui reçoit le module de résolution de contention tel qu'il l'a émis.

Une autre structure de contention connue prévoit l'adjonction d'un lien complémentaire de contention auquel sont reliés tous les équipements d'un agencement de transmission. Une signalisation est transmise sur ce lien de contention par l'équipement en émission à un instant considéré pour interdire temporairement toute émission par un autre équipement au moyen de l'agencement, des dispositions étant prévues au niveau de l'organisation des équipements et globalement de l'agencement de transmission pour que chaque équipement puisse normalement effectuer ses émissions dans des délais compatibles avec ses besoins.

Une défaillance affectant la liaison, ou éventuellement le lien de contention, est susceptible de bloquer l'agencement de transmission et les diverses solutions évoquées ci-dessus conduisent pratiquement aux mêmes inconvénients qui sont susceptibles d'être très gênants avec bon nombre d'agencements de transmission destinés à fonctionner de manière quasi-permanente et en particulier dans le cas où l'ensemble desservi fonctionne en temps réel, comme le commutateur évoqué plus haut.

L'invention propose donc un procédé et un agencement de transmission mettant en oeuvre un bus, ici électrique mais éventuellement autre et notamment optique, qui interconnecte une pluralité d'équipements ayant à communiquer entre eux par l'intermédiaire de cellules obtenues par groupement d'octets relevant de canaux de transmission, soit isochrones, soit asynchrones et qui comporte des liaisons multiplexes temporelles auxquelles chaque équipement est relié, ce procédé et cet agencement étant destinés à offrir une grande sécurité et à s'adapter dynamiquement aux besoins des unités et plus généralement de l'ensemble desservi, en fonction des contraintes présentes et en particulier de celles susceptibles d'être imposées lors d'un fonctionnement en dégradé.

Comme connu, les transmissions de cellules à partir des équipements sur les liaisons s'effectuent sous forme série, liaison par liaison et à raison d'une cellule par liaison, suite à une phase de contention entre équipements simultanément désireux d'émettre au cours de laquelle ces équipements se portent simultanément sur une même des liaisons pour y émettre, conjointement et bit par bit, un module de résolution de contention à partir de leurs priorités individuelles, respectives, traduites sous forme binaire prédéterminée. Les équipements les moins prioritaires s'éliminent au premier bit du module de résolution de contention qui, reçu, ne correspond plus à celui qu'ils ont émis, l'équipement autorisé à émettre une cellule sur la liaison jusqu'ici soumise à contention étant celui pour lequel le module de résolution de contention émis correspond à ce que lui-même à émis, Selon une caractéristique du procédé selon l'invention, il est prévu une répartition en succession des phases de contention relatives aux différentes liaisons de l'agencement, par affectation de temps d'horloge d'émission décalés aux différentes liaisons qui sont régies par une horloge commune, pour limiter les contentions entre mêmes équipements à une seule des liaisons à la fois.

De plus dans l'agencement prévu pour la mise en oeuvre du procédé selon l'invention, chaque équipement comporte des moyens pour, d'une part émettre successivement, sur celle des liaisons du bus qui est soumise à contention au cours d'une des phases de contention successives auquel cet équipement participe, les bits constitutifs d'un module de résolution de contention, structuré de manière identique pour tous les équipements et composé d'au moins un élément représentatif d'un niveau déterminé de priorité correspondant à celui de l'équipement pour la contention en cours, ainsi que pour comparer à la réception et en conséquence interrompre l'émission de ces bits par l'équipement dès détection, en réception sur la liaison alors concernée, d'un bit différent de celui que cet équipement a tenté d'y émettre, l'équipement non interrompu lors d'une contention conservant temporairement seul la liaison pour l'émission d'une cellule.

Selon une autre caractéristique de l'invention, l'agencement comporte des moyens d'horloge, au niveau de chacun des équipements, qui régissent temporellement toutes les liaisons à partir d'une horloge commune et qui affectent de temps d'horloge décalés les émissions des bits sur chacune des différentes liaisons, notamment celles des bits des modules de contention, pour limiter les contentions entre mêmes équipements à une seule des liaisons à la fois.

L'invention, ses caractéristiques et ses avantages sont précisés dans la description qui suit, en liaison avec les figures répertoriées ci-dessous.

La figure 1 présente un exemple d'application d'un agencement de transmission selon l'invention.

La figure 2 présente un exemple de structure de transmission pour agencement selon l'invention.

La figure 3 présente un diagramme relatif au procédé de contention mis en oeuvre dans l'agencement de transmission selon l'invention.

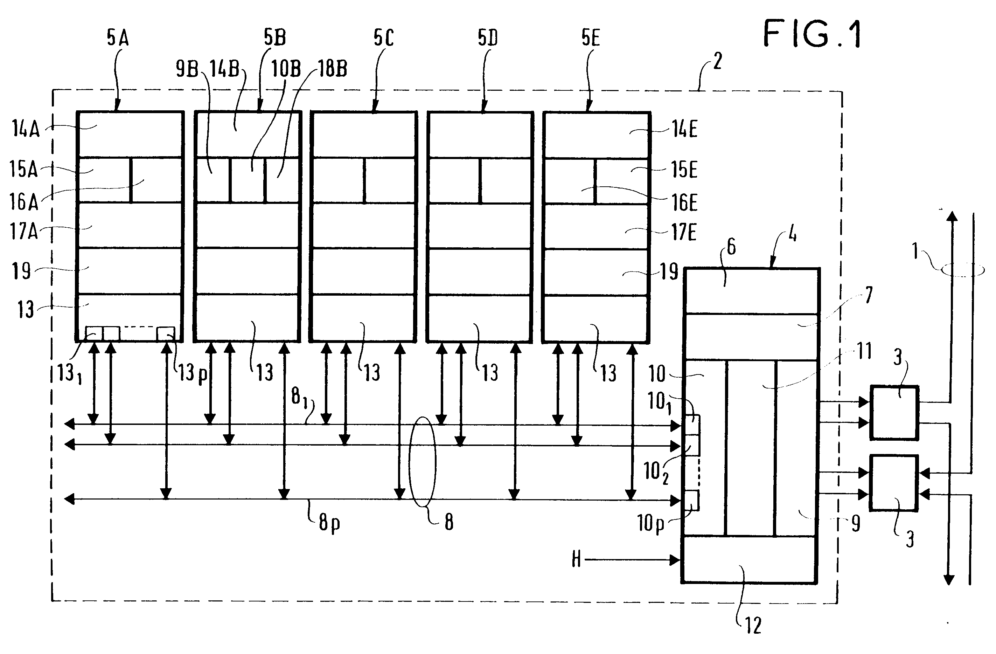

L'exemple d'application d'agencement de transmission proposé figure 1 est destiné à être incorporé dans un ensemble plus vaste qui est par exemple de type réseau local étendu. Un tel réseau, notamment à intégration de services (RNIS), est susceptible de s'étendre au niveau d'une ville et d'être structuré autour d'une double boucle 1 de transmission, réalisée à l'aide de fibres optiques, sur laquelle les transmissions d'informations numérisées s'effectuent avec un fort débit, par exemple 155 Mb/s pour chacun des deux sens prévus, et sous forme de cellules telles que par exemple celles constituées selon le standard IEEE 802.6 établi par l'organisation intitulée "Institute of Electrical and Electronic Engineers" pour les réseaux RNIS à large bande.

Un tel réseau en boucle est susceptible de desservir une pluralité de groupes d'abonnés répartis au long de la double boucle par l'intermédiaire de laquelle ils communiquent, chaque groupe, tel le groupe 2 seul figuré ici, exploitant au moins l'un des services offerts par le réseau.

Un transmetteur optique 3 connecte chaque groupe, tel 2, à chacune des deux liaisons optiques de la double boucle 1. Les transmetteurs optiques 3 sont prévus pour assurer les forts débits de données numériques autorisés par les liaisons optiques, ils sont connectés à un adaptateur 4 dans le groupe 2 qu'ils desservent, cet adaptateur sert d'interface entre les transmetteurs optiques 3 du groupe et des coupleurs 5, tel 5A, destinés à satisfaire aux besoins des abonnés du groupe 2 et constituant des équipements au sens de la présente description, de même que l'adaptateur 4.

Les coupleurs 5 ont généralement des débits numériques très inférieurs à ceux de la double boucle 1 et n'exigent donc pas un niveau de performances, tant pour eux-mêmes que pour la partie de l'adaptateur 4 les desservant, qui soit comparable à celui que doit avoir cet adaptateur pour ses communications avec la double boucle 1.

Dans l'exemple proposé, un adaptateur 4 comporte essentiellement :
- un logiciel d'application 6 pour les différentes tâches dues à la présence du groupe 2 dans l'ensemble que dessert la double boucle 1 et à son appartenance à cet ensemble;
- un sous-ensemble microprogrammé (firmware) 7 globalement chargé du fonctionnement et plus particulièrement de la commutation et du traitement des données échangées entre la double boucle 1 et un bus 8, de type électrique, desservant les coupleurs 5 du groupe 2 auquel l'adaptateur 4 considéré est affecté;
- une interface 9 de boucle 1, associant des moyens logiciels et des moyens matériels pour l'émission et la réception des signaux optiques via les transmetteurs optiques 3;
- une interface 10 de bus électrique, modulaire et formée d'une pluralité d'identiques unités émettrices-réceptrices 10₁ à 10ₚ , cette interface de bus associant des moyens logiciels et des moyens matériels pour l'émission de signaux électriques vers le bus 8 ou la réception de signaux électriques provenant de lui;
- un sous-ensemble d'interconnexion 11, composé de moyens logiciels et matériels de mise à compatibilité des signaux électriques transmis d'une des deux interfaces 9, 10 auxquelles il est relié, vers l'autre;
- un agencement d'horloge 12 pour les synchronisations des émissions et réceptions tant par voie optique à partir de signaux obtenus de la boucle 1, via l'interface de boucle 9, que par voie électrique à l'aide de signaux "H" spécifiquement fournis au groupe 2 par une horloge de synchronisation non représentée.

Le logiciel d'application 6, le sous-ensemble microprogrammé 7, les interfaces 9, 10, le sous-ensemble d'interconnexion 11 et l'agencement d'horloge 12 ne seront pas développés ici dans la mesure où, connus et classiques pour l'homme de métier, ils n'ont qu'un rapport indirect avec l'objet même de l'invention.

Comme déjà indiqué plus haut, dans la réalisation proposée, l'adaptateur 4 et les coupleurs 5 d'un groupe 2 sont reliés entre eux par un bus 8 dans le cadre d'un agencement de transmission qui est propre au groupe. Ce bus 8 comporte "p" liaisons de transmission 8₁ à 8ₚ , multiplexes temporelles, distinctes, à chacune desquelles est reliée l'une des unités émettrices-réceptrices de l'interface 10 et de chaque coupleur 5 du groupe 2.

Les coupleurs 5 qui, comme indiqué plus haut, sont conçus pour répondre aux besoins spécifiques des utilisateurs sont susceptibles d'être plus spécifiquement orientés vers des applications particulières tout en ayant généralement des organisations équivalentes.

Dans l'exemple proposé on trouve ainsi un coupleur 5A pour postes et terminaux téléphoniques, un coupleur 5B pour une unité de commande centrale du groupe 2, un coupleur 5C pour terminaux asynchrones de transmission de données, par exemple selon la normalisation V24, un coupleur 5D, de type passerelle, pour une liaison auxiliaire avec un autre groupe, un coupleur 5E pour une application traitant des données organisées selon un standard différent par exemple selon le standard IEEE 802.3/5 pour accès à un réseau de type ETHERNET, etc...

Comme indiqué ci-dessus, chacun de ces coupleurs comporte par exemple :
- une interface 13 de bus électrique qui, semblable à l'interface 10 de bus électrique de l'adaptateur 4, comporte au moins "p" unités émettrice-réceptrices 13₁ à 13ₚ , pour chaque coupleur 5, et associe identiquement des moyens logiciels et des moyens matériels pour l'émission de signaux électriques vers le bus 8 ou la réception des signaux transmis par lui;
- au moins une interface matérielle 14 d'accès au sous-ensemble particulier desservi par le coupleur considéré, telle la ou les interfaces 14A d'accès à des postes ou terminaux téléphoniques pour le coupleur 5A, la ou les interfaces 14B d'accès à l'unité de commande centrale du groupe 2 pour le coupleur 5B ..., l'interface 14E d'accès à un standard différent pour le coupleur 5E;
- un logiciel d'application 15, tel 15A, 15B, 15C, 15D, ou 15E relatif aux tâches spécifiques au coupleur considéré;
- un sous-ensemble microprogrammé d'application 16, tel 16A, 16B, 16C, 16D ou 16E en liaison avec l'interface 14 correspondante du coupleur;
- un sous-ensemble microprogrammé 17, tel 17A, 17B, 17C, 17D ou 17E, globalement chargé du fonctionnement et plus particulièrement de la commutation et du traitement des données échangées au travers du coupleur;
- éventuellement un sous-ensemble de moyens matériels d'interaction associés au sous-ensemble microprogrammé d'un coupleur, tels les moyens 18B associés au sous-ensemble 17B du coupleur 5B;
- un sous-ensemble d'interconnexion 19 composé de moyens logiciels et matériels de mise en liaison du sous-ensemble microprogrammé d'un coupleur avec l'interface 13 de ce coupleur.

Le bus 8, qui sert à interconnecter les diverses unités émettrices-réceptrices des interfaces de bus électrique 10 et 13, constitue par exemple un bus, dit de fond de panier, d'une alvéole de baie d'une installation de télécommunication.

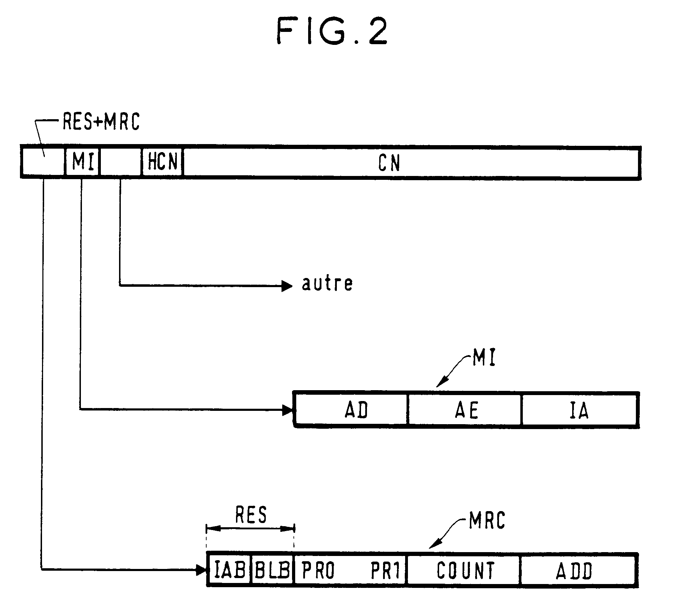

Dans la mesure où les informations transmises sur la double boucle 1 sont organisées en cellules normalisées CN - figure 2 -de quarante huit octets précédées d'un en-tête HCN de cinq octets, il est prévu selon l'invention de choisir des liaisons de transmission, multiplexes temporelles, 8₁ à 8ₚ, aptes à transmettre chacune au moins cinquante trois octets et préférablement au moins cent six, c'est-à-dire l'équivalent de deux cellules par trame.

Dans l'exemple proposé, chaque liaison multiplexe temporelle, est prévue, selon le recommandation G.704 évoquée plus haut, avec un débit de l'ordre de 8 Mb/s correspondant à une transmission d'un nombre "n" de 128 octets par trame de durée "T" égale à 125 µs.

De manière connue et rappelée plus haut, un tel choix permet aussi la transmission d'octets correspondant à des signaux produits par des agencements de multiplexage MIC primaire, classiques, appliquant la recommandation G.732 du CCITT pour en particulier la transmission des signaux de parole par des canaux isochrones, au rythme d'un octet par canal et par trame, après échantillonnage et codage de ces signaux sous forme d'octets.

Une même liaison multiplexe temporelle est ainsi apte à transmettre tant des octets nécessitant l'usage de canaux isochrones que les octets transmissibles par des canaux asynchrones, les uns et les autres étant ici séparément groupés dans des cellules comportant chacune quarante huit octets et précédées chacune d'un en-tête de cinq octets. Dans l'agencement:proposé où chaque équipement, c'est-dire tant l'adaptateur 4 que chaque coupleur 5, est relié par une unité émettrice-réceptrice différente d'interface 10 ou 13 à chacune des liaisons de transmission 8₁ à 8ₚ, il est prévu de transmettre les bits de chaque cellule en série par l'intermédiaire d'une même liaison, c'est à dire à partir d'une seule unité émettrice-réceptrice, "p" unités émettrices-réceptrices d'équipements étant susceptibles d'être simultanément en émission chacune sur une liaison différente de l'agencement de transmission 8, une même horloge régissant préférablement tout cet agencement.

Dans la mesure où les échanges d'informations sous forme de cellules entre groupes par la double boucle impliquent l'emploi d'en-têtes de cellules élaborés qui ne concernent pas directement l'agencement de transmission par bus 8 interne d'un groupe tel que 2, il est prévu d'éviter l'examen de ces en-têtes au niveau des unités émettrices-réceptrices par mise en oeuvre d'un adressage spécifique simplifié pour les transmissions entre unités émettrices-réceptrices dans l'agencement de transmission 8.

Chaque émission de cellule sur une liaison par une unité émettrice-réceptrice est donc précédée par l'émission d'une adresse de destination AD qui peut par exemple être l'adresse physique d'un des équipements desservis par l'agencement de transmission 8 ou une adresse logique significative pour au moins l'un de ces équipements.

Cet adressage spécifique à l'agencement de transmission qui évite l'examen de l'en-tête HCN des cellules à des niveaux où cet examen n'est pas indispensable, permet d'obtenir un même niveau d'efficacité et une fiabilité accrue avec des éléments constitutifs d'équipements moins sophistiqués puisque les vitesses de traitement peuvent être plus basses et qu'en conséquence un coût moindre peut être atteint.

Dans la réalisation envisagée, un octet d'adressage - physique ou logique - spécifique est ajouté avant l'en-tête HCN de toute cellule émise sur une des liaisons de l'agencement de transmission 2, au moment de son émission par un équipement, afin de permettre la prise en compte de cette cellule par le ou les équipements destinataires où cet octet d'adressage est éliminé après exploitation.

La génération des octets d'adressage est assurée par exemple au niveau des interfaces de bus électrique ou des sous -ensembles d'interconnexion individuels des équipements au moyen d'un dispositif classique, de type logique, dûment commandé à chaque émission sur une des liaisons du bus d'une manière bien connue qui ne sera pas développée ici, car elle n'a qu'un rapport indirect avec l'invention.

Un simple dispositif de reconnaissance d'adresse, par exemple en logique câblée, est susceptible de suffire à un équipement, telle une carte de circuit, à sélectionner les cellules qui lui sont destinées parmi toutes les cellules transmises.

Dans une forme préférée de réalisation, une indication précisant l'adresse AE de l'équipement émetteur est associée à chaque octet d'adressage de cellule, par exemple sous forme d'un octet supplémentaire émis après l'octet d'adressage et avant le premier octet d'en-tête HCN de la cellule considérée.

Une indication additionnelle IA est également susceptible d'être ajoutée au profit du ou des équipements destinataires pour individualiser chaque cellule par rapport aux cellules du même paquet transmis à partir d'un même équipement émetteur. A cet effet, ce dernier est alors apte à fournir par comptage des numéros successifs d'identification pour les cellules d'un paquet qu'il émet successivement ainsi qu'un code d'identification de fin de paquet; ces numéros d'identification de cellule et cette identification de fin sont par exemple codés en un octet transmis avec l'octet d'adressage de cellule et l'octet précisant l'adresse de l'équipement émetteur. La succession de bits formée par association d'une adresse de destination, d'une adresse d'équipement émetteur et éventuellement d'une indication additionnelle d'identification de cellule et/ou de fin forme un message identificateur qui est transmis, préalablement à l'en-tête HCN de la cellule qu'il individualise sur la liaison de transmission concernée.

Dans la mesure où chaque équipement associé à l'agencement de transmission 8 est susceptible d'être amené à émettre, il est prévu une structure de contention pour attribuer les liaisons de transmission 8₁ à 8ₚ de l'agencement aux équipements par exemple par un système de priorités rotatives permettant de répondre aux besoins évolutifs des équipements, selon les disponibilités.

Dans la forme de réalisation proposée, pour obtenir une sécurité, une souplesse et une disponibilité maximales, même en fonctionnement dégradé, il est prévu de régler les contentions liaison par liaison.

A cet effet, les équipements désireux de transmettre par l'intermédiaire de l'agencement de transmission 8, tentent de disposer temporairement d'une des "p" liaisons 8₁ à 8p pour émettre.

Bien entendu l'émission d'octets nécessitant la mise en oeuvre de canaux isochrones par un ou plusieurs équipements implique un procédure différente de celle prévue pour les cellules transmissibles de manière asynchrone et il est, par exemple, temporairement prévu pour ces octets une réservation systématique d'une cellule à chaque trame sur une des liaisons de l'agencement de transmission 8 pour pour la durée d'émission d'octets de ce type par ce ou ces équipements.

Le message identificateur MI de chaque cellule est donc précédé à l'émission par un message d'affectation, par exemple composé de quatre octets.

Ce message d'affectation comprenant ici un module de réservation RES suivi d'un module de résolution de contention MRC.

Un premier élément IAB de module de réservation traduit l'affectation de la cellule qui suit à la transmission d'octets de canaux isochrones, il est par exemple constitué par un bit dont la valeur indique ou non si la cellule qui suit est affectée comme indiqué ici.

Dans la mesure où les transmissions d'octets de canaux isochrones sont susceptibles de s'étendre dans le temps, il est préférablement prévu un marquage systématique de l'élément de réservation IAB d'une ou de plusieurs cellules identiquement positionnées au cours des trames successives sur la ou les liaisons de l'agencement de transmission 8 qu'elles empruntent.

Ce marquage est préférablement réservé à un équipement spécifique par exemple à l'unité de commande centrale d'un groupe, qui agit via son coupleur 5B.

Dans l'exemple proposé, chaque module de réservation MRC comporte un second élément BLB permettant d'affecter, d'une manière analogue à celle évoquée ci-dessus, l'usage de la cellule qui suit, par exemple à la réalisation de tests, la réservation effectuée permet alors de forcer le passage du trafic sur une liaison déterminée dont seules les cellules ne sont pas réservées par l'intermédiaire des éléments BLB qui leur sont associés. Chaque élément BLB est par exemple constitué d'un seul bit de même que l'élément IAB qu'il suit.

La contention entre cellules non réservées est ici assurée par les bits constituant les modules de résolution de contention MRC, ces bits étant susceptibles d'être forcés à l'une ou l'autre de leurs deux valeurs possibles par tous les équipements desservis par l'agencement de transmission 8, contrairement aux deux éléments de réservation IAB et BLB qui les précèdent.

Pour résoudre de manière simple et efficace les contentions entre équipements voulant simultanément émettre et par conséquent voulant réserver à leurs profits respectifs les cellules disponibles sur les liaisons de l'agencement de transmission 8, il est prévu de répartir dans le temps les contentions affectant les cellules transmises par les différentes liaisons.

Ceci est ici obtenu en affectant des temps d'horloge décalés d'une même quantité déterminée aux émissions des modules de résolution de contention - ou pratiquement aux messages d'affectation, associant chacun un module de réservation RES à un module de résolution de contention MRC - des cellules sur chacune des différentes liaisons 8₁ à 8ₚ régies par une horloge commune, de manière que l'émission d'un bit et en particulier de celui du premier élément IAB d'un message sur une liaison, ne soit pas simultanée avec celle du bit fonctionnellement correspondant d'une des autres liaisons du même agencement de transmission 8.

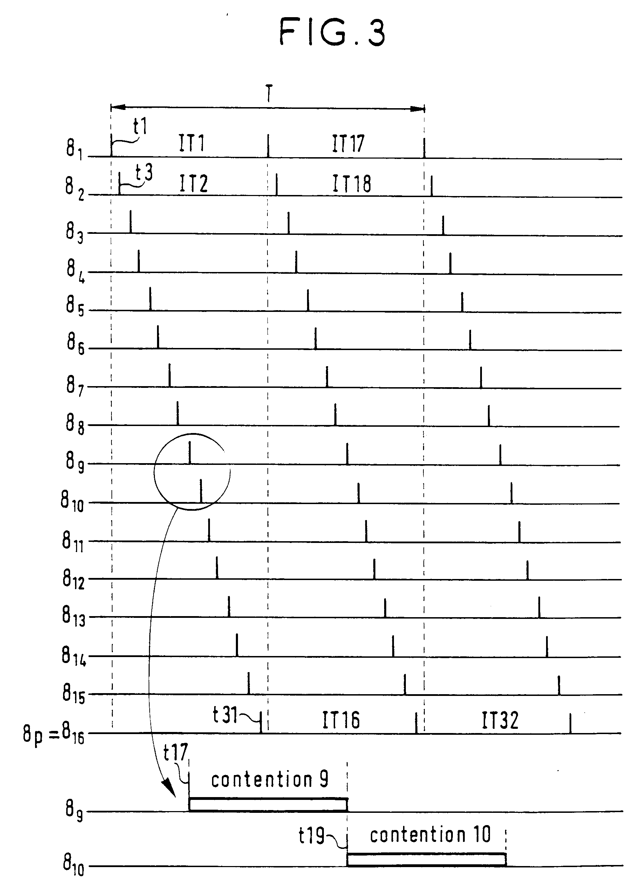

Dans l'exemple présenté sur la figure 3, où l'émission du premier élément IAB d'un message de réservation émis sur la liaison 8₁ est prévue au premier temps t1 du premier intervalle de temps IT1 d'une trame T, l'émission du premier élément IAB d'un message de réservation émis sur la liaison 8₂ est prévue avec un retard égal à un intervalle de temps plus un temps d'horloge, c'est-à-dire au temps t2 du second intervalle de temps de la trame T et ainsi de suite le premier élément IAB d'un message émis sur la liaison 8₁₆ devant être émis au temps t16 de l'intervalle de temps IT16 de la trame T.

Si les décalages introduits évitent les contentions des équipements simultanément pour plusieurs mêmes cellules, il est aussi nécessaire d'assurer l'attribution d'une cellule disponible à l'un des équipements ayant à émettre qui sera considéré comme le plus prioritaire. Ceci peut être obtenu par usage d'un processus impliquant le forçage d'au moins certains bits du module de résolution de contention MRC de cette cellule conjointement ou isolément par les équipements concernés qui d'une part écrivent et d'autre part lisent ce module au fur et à mesure de sa confection pour individuellement déterminer si la cellule convoitée leur est ou non toujours disponible pour eux.

De tels processus sont bien connus, l'un d'entre eux est obtenu par forçage d'une liaison, dont une cellule est sujette à contention, à l'un ou l'autre de deux niveaux binaires par le ou les équipements en compétition pour émettre, le ou les équipements les plus prioritaires forcent la liaison par exemple au niveau zéro alors que le ou les autres tentent de la forcer à un niveau un, seuls se maintiennent en compétition le ou les équipements qui lisent sur la liaison la valeur qu'ils ont forcée, le ou les autres étant éliminés.

Dans la forme de réalisation proposée, chaque équipement voulant émettre tente de se réserver une cellule successivement sur chacune des liaisons au fur et à mesure des périodes de temps permettant successivement les contentions sur chacune des liaisons de l'agencement de transmission 8 et ce tant qu'il n' a pas réussi.

A cet effet, chaque équipement comptabilise globalement le nombre de ces échecs successifs et marque en conséquence la liaison sur laquelle il tente de se réserver une cellule disponible, au cours des temps de trame correspondant aux bits d'élément COUNT précédant cette cellule.

L'équipement dont le marquage traduit alors le plus grand nombre d'échecs est alors choisi s'il est seul.

Un troisième élément ADD complète chaque module de résolution de contention MRC il permet de résoudre les contentions non résolues jusqu'alors, ici en prenant en compte les adresses binaires données aux équipements pour attribuer la priorité en dernier recours, la priorité étant par exemple attribué à l'équipement dont l'adresse est la plus basse.

## Revendications

1. Procédé de transmission pour agencement mettant en oeuvre un bus (8), qui interconnecte une pluralité d'équipements (4, 5A à 5E) ayant à communiquer entre eux par l'intermédiaire de cellules obtenues par groupement d'octets relevant de canaux de transmission soit isochrones, soit asynchrones, qui comporte des liaisons multiplexes temporelles (8₁ à 8ₚ) auxquelles chaque équipement est relié, et au moyen duquel les transmissions de cellules à partir des équipements sur les liaisons s'effectuent sous forme série, liaison par liaison et à raison d'une cellule par liaison, suite à une phase de contention entre équipements simultanément désireux d'émettre au cours de laquelle ces équipements se portent simultanément sur une même des liaisons pour y émettre, conjointement et bit par bit, un module de résolution de contention (MRC) à partir de leurs priorités individuelles, respectives, traduites sous forme binaire prédéterminée, les équipements les moins prioritaires s'éliminant au premier bit du module de résolution de contention qui, reçu, ne correspond plus à celui qu'ils ont émis, l'équipement autorisé à émettre une cellule sur la liaison jusqu'ici soumise à contention étant celui pour lequel le module de résolution de contention émis correspond à ce que lui-même à émis, caractérisé en ce qu'il est prévu une répartition en succession des phases de contention relatives aux différentes liaisons (8₁ à 8ₚ) de l'agencement, par affectation de temps d'horloge d'émission décalés aux différentes liaisons qui sont régies par une horloge commune, pour limiter les contentions entre mêmes équipements à une seule des "p" liaisons à la fois.

2. Procédé de transmission, selon la revendication 1, caractérisé en ce que les périodes réservées à l'émission des modules de résolution de contention (MRC) relatifs aux différentes liaisons sont prévues réparties également et de manière identique au cours des trames temporelles successives de transmission.

3. Procédé de transmission, selon au moins l'une des revendications 1 et 2, caractérisé en ce que l'émission d'une cellule sur une liaison (8₁ à 8ₚ) est systématiquement précédée par l'émission d'un module de contention produit par l'équipement émetteur auquel s'associent éventuellement d'autres équipements, désireux d'émettre mais moins prioritaires.

4. Procédé de transmission, selon la revendication 3, caractérisé en ce que chaque module de résolution de contention (MRC) qui comporte au moins un élément (PRO, PR1) représentatif d'un niveau déterminé de priorité correspondant à celui de l'équipement désireux d'émettre le plus prioritaire est émis à la suite d'un module de réservation (RES) avec lequel il forme un message d'affectation de cellule, ce module de réservation étant caractéristique de la disponibilité de la cellule à venir, pour une éventuelle contention entre équipements (4, 5A à 5E) désireux d'exploiter cette cellule pour émettre.

5. Procédé de transmission selon la revendication 4, caractérisé en ce que chaque message d'affectation de cellule est suivi d'un message identificateur (MI) produit par l'équipement émetteur et précisant au moins l'adresse (AD) physique ou logique du ou des équipements destinataires par rapport à l'agencement, ledit message identificateur étant émis préalablement à la cellule et évitant l'analyse du contenu de cette dernière pour sa transmission au travers de l'agencement.

6. Procédé de transmission selon la revendication 5, caractérisé en ce que le message identificateur (MI) émis par un équipement sur une liaison, préalablement à une cellule, précise l'adresse (AE) de l'équipement émetteur, suite à celle du destinataire, et fournit une indication (IA) d'identification de rang de cellule et/ou de fin.

7. Agencement de transmission mettant en oeuvre un bus, qui interconnecte une pluralité d'équipements (4, 5A à 5E) ayant à communiquer entre eux par l'intermédiaire de cellules obtenues par groupement d'octets relevant de canaux de transmission, soit isochrones, soit asynchrones et qui comporte "p" liaisons multiplexes temporelles (8₁ à 8ₚ) auxquelles chaque équipement est relié, tout équipement comportant des moyens pour, d'une part émettre successivement, sur celle des liaisons du bus qui est soumise à contention au cours d'une des phases de contention successives auquel cet équipement participe, les bits constitutifs d'un module de résolution de contention, structuré de manière identique pour tous les équipements et composé d'au moins un élément représentatif d'un niveau déterminé de priorité correspondant à celui de l'équipement pour la contention en cours, ainsi que pour comparer à la réception et en conséquence interrompre l'émission de ces bits par l'équipement dès détection, en réception sur la liaison alors concernée, d'un bit différent de celui que cet équipement a tenté d'y émettre, l'équipement non interrompu lors d'une contention conservant temporairement seul la liaison pour l'émission d'une cellule, caractérisé en ce qu'il comporte des moyens d'horloge (12), au niveau de chacun des équipements, qui régissent temporellement toutes les liaisons à partir d'une horloge commune (H) et qui affectent de temps d'horloge décalés les émissions des bits sur chacune des différentes liaisons, notamment celles des bits des modules de contention, pour limiter les contentions entre mêmes équipements à une seule des liaisons à la fois.

8. Agencement de transmission selon la revendication 7, caractérisé en ce que chaque équipement comporte au niveau de son interface de bus électrique (10, 13) des moyens de génération d'adresses connectés aux différentes liaisons du bus et aptes à assurer sélectivement l'émission en série d'au moins l'adresse d'au moins un équipement destinataire sur une seule des liaisons à laquelle ils sont temporairement dédiés, ainsi que des moyens de reconnaissance de l'adresse physique et/ou logique attribuée(s) à l'équipement, en réception sur l'une quelconque des liaisons du bus.

## Patentansprüche

1. Übertragungsverfahren für eine Anlage mit einem Bus (8), der mehrere Einrichtungen (4, 5A bis 5E) miteinander verbindet, die miteinander in Form von Zellen verkehren wollen, die durch Zusammenfassung von aus entweder isochronen oder asynchronen Übertragungskanälen kommenden Bytes erhalten werden, wobei der Bus Zeitmultiplexverbindungen (8₁ bis 8ₚ) aufweist, an die jede Einrichtung angeschlossen ist und über die die Übertragungen von Zellen von den Einrichtungen auf die Verbindungen in Serienform, und zwar Verbindung für Verbindung und eine Zelle je Verbindung, nach einer Streitschlichtungsphase zwischen Einrichtungen erfolgen, die gleichzeitig senden wollen, während der diese Einrichtungen gleichzeitig auf einer gemeinsamen Verbindung und Bit für Bit einen Streitschlichtungsmodul (MRC) aufgrund ihrer individuellen jeweiligen Prioritäten in einer bestimmten Binärform aussenden, wobei die Einrichtungen mit der niedrigsten Priorität schon mit dem ersten Bit des Streitschlichtungsmoduls eliminiert werden, der beim Empfang nicht dem Bit entspricht, das sie ausgesendet haben, während die Einrichtung, die eine Zelle auf der Verbindung aussenden darf und bis dahin der Streitschlichtung unterlag, diejenige ist, für die die Streitschlichtungsmodul dem ausgesendeten Modul entspricht, dadurch gekennzeichnet, daß eine zeitliche Verteilung der Streitschlichtungsphasen bezüglich der verschiedenen Verbindungen (8₁ bis 8ₚ) der Anlage durch Zuordnung von zeitverschobenen Sendetakten zu den verschiedenen Verbindungen vorgesehen ist, die von einem gemeinsamen Takt beherrscht werden, um die Konflikte zwischen gleichen Einrichtungen auf einer bestimmten der p Verbindungen zugleich zu beschränken.

2. Übertragungsverfahren nach Anspruch 1, dadurch gekennzeichnet, daß die für das Aussenden der Streitschlichtungsmoduln (MRC) bezüglich der verschiedenen Verbindungen reservierten Perioden gleichmäßig und identisch während der aufeinanderfolgenden Übertragungszeitrahmen verteilt sind.

3. Übertragungsverfahren nach mindestens einem der Ansprüche 1 und 2, dadurch gekennzeichnet, daß der Aussendung einer Zelle auf einer Verbindung (8₁ bis 8ₚ) systematisch die Aussendung eines Streitschlichtungsmoduls vorausgeht, der von der sendenden Einrichtung erzeugt wird und der sich ggf. andere Einrichtungen anschließen, die auch senden wollen, aber eine geringere Priorität aufweisen.

4. Übertragungsverfahren nach Anspruch 3, dadurch gekennzeichnet, daß jeder Streitschlichtungsmodul (MRC), der mindestens ein für ein bestimmtes Prioritätsniveau entsprechend dem der sendebereiten Einrichtung mit der höchsten Priorität repräsentatives Element (PRO, PR1) enthält, nach einem Reservierungsmodul (RES) ausgesendet wird, mit dem er eine Zellenzuordnungsnachricht bildet, wobei dieser Reservierungsmodul die Verfügbarkeit der kommenden Zelle für eine eventuelle Streitschlichtung zwischen Einrichtungen (4, 5A bis 5E) kennzeichnend ist, die diese Zelle zur Aussendung nutzen wollen.

5. Übertragungsverfahren nach Anspruch 4, dadurch gekennzeichnet, daß auf jede Zellenzuordnungsnachricht eine Identifizierungsnachricht (MI) folgt, die von der aussendenden Einrichtung erzeugt wird und mindestens die tatsächliche oder logische Adresse (AD) der Zieleinrichtung(en) bezüglich der Übertragungsanlage angibt, wobei die Identifizierungsnachricht vor der Zelle ausgesendet wird und die Analyse des Inhalts dieser Zelle für die Übertragung durch die Übertragungsanlage vermeidet.

6. Übertragungsverfahren nach Anspruch 5, dadurch gekennzeichnet, daß die Identifizierungsnachricht (MI), die von einer Einrichtung auf einer Verbindung vor einer Zelle ausgesendet wird, die Adresse (AE) der sendenden Einrichtung hinter der Zieladresse angibt und eine Angabe (IA) zur Identifizierung des Rangs der Zelle und/oder des Endes liefert.

7. Übertragungsanlage mit einem Bus, der eine Mehrzahl von Einrichtungen (4, 5A bis 5E) miteinander verbindet, die untereinander über durch Zusammenfassung von Bytes aus entweder isochronen oder asynchronen Übertragungskanälen erhaltene Zellen verkehren wollen, wobei der Bus p Zeitmultiplexverbindungen (8₁ bis 8ₚ) aufweist, an die jede Einrichtung angeschlossen ist, wobei jede Einrichtung Mittel aufweist, um einerseits nacheinander auf derjenigen Busverbindung, die einer Streitschlichtung während einer der aufeinanderfolgenden Phasen der Streitschlichtung unterliegt, an der diese Einrichtung teilnimmt, die Bits eines Streitschlichtungsmoduls auszusenden, der für alle Einrichtungen gleich strukturiert ist und aus mindestens einem für einen bestimmten Prioritätsrang entsprechend dem der Einrichtung für die laufende Streitschlichtung repräsentativen Element besteht, und um sie bei Empfang zu vergleichen und demgemäß die Aussendung dieser Bits durch die Einrichtung abzubrechen, sobald bei Empfang auf der dann betroffenen Verbindung ein anderes Bit erfaßt wird, als diese Einrichtung auszusenden versucht hat, wobei die Einrichtung, die bei einer Streitschlichtung nicht unterbrochen wurde, vorübergehend allein die Verbindung für die Aussendung einer Zelle besetzt hält, dadurch gekennzeichnet, daß die Anlage Taktmittel (12) in Höhe jeder der Einrichtungen aufweist, die vorübergehend alle Verbindungen ausgehend von einem gemeinsamen Takt (H) beherrschen und die Aussendung der Bits auf jeder der verschiedenen Verbindungen, insbesondere die der Bits der Streitschlichtungsmoduln einer Taktverzögerung unterwerfen, um die Konflikte zwischen gleichen Einrichtungen auf eine einzige der Verbindungen zugleich zu begrenzen.

8. Übertragungsanlage nach Anspruch 7, dadurch gekennzeichnet, daß jede Einrichtung in Höhe ihrer Schnittstelle (10, 13) zum elektrischen Bus Mittel zur Erzeugung von Adressen aufweist, die mit den verschiedenen Busverbindungen verbunden sind und selektiv die Aussendung mindestens der Adresse mindestens einer Zieleinrichtung auf einer einzigen der Verbindungen in Reihe gewährleistet, der sie vorübergehend zugeordnet sind, und daß Mittel zur Erkennung der tatsächlichen und/oder logischen Adresse vorgesehen sind, die der Einrichtung beim Empfang auf einer beliebigen der Busverbindungen zugewiesen ist.

## Claims

1. Transmission method for a system using a bus (8) which interconnects a plurality of equipments (4, 5A through 5E) requiring to communicate with each other by means of cells obtained by grouping octets representative of isochronous or asynchronous transmission channels and which comprises time-division multiplex links (8₁ to 8ₚ) to which each equipment is connected and by means of which cells are transmitted from the equipments over the links in serial form with one cell per link following a contention phase between equipments simultaneously requiring to transmit during which said equipments simultaneously use a common one of the links to transmit thereon conjointly and bit by bit a contention resolution module based on their respective individual priority translated into predetermined binary form, the lowest priority equipments disconnecting on the first bit of the contention resolution module (MRC) received which does not match that which they send, the equipment authorised to send a cell on the link until this point affected by the contention being that for which the contention resolution module sent corresponds to that which it sent itself, characterised in that a succession of contention phases is provided relating to the various links (8₁ through 8ₚ) of the system, by offsetting the send clock times of the various links timed by a common clock, so as to limit the contentions between the same equipments to a single one of the "p" links at a time.

2. Transmission method according to claim 1 characterised in that the periods reserved for the transmission of contention resolution modules (MRC) relating to the various links are equally distributed in an identical manner in successive transmission time-division frames.

3. Transmission method according to claim 1 or claim 2 characterised in that the transmission of a cell on a link (8₁ through 8ₚ) is systematically preceded by the transmission of a contention module produced by the transmitter equipment with which are optionally associated other equipments requiring to transmit but of lower priority.

4. Transmission method according to claim 3 characterised in that each contention resolution module (MRC) which includes at least one element (PR0, PR1) representative of a given priority level representing that of the equipment requiring to transmit having the highest priority is transmitted after a reservation module (RES) with which it forms a cell assignment message, the reservation module being characteristic of the availability of the cell to come for any contention between equipments (4, 5A through 5E) requiring to use this cell to transmit.

5. Transmission method according to claim 4 characterised in that each cell assignment message is followed by an identifier message (MI) produced by the transmitting equipment and specifying at least the physical or logical address (AD) of the destination equipment(s) relative to the system, said identifier message being sent before the cell and avoiding the need to analyse the content of the latter for it to be transmitted through the system.

6. Transmission method according to claim 5 characterised in that the identifier message (MI) transmitted by an equipment on a link before a cell specifies the address (AE) of the transmitting equipment after that of the destination and provides a cell rank and/or end identification indication (IA).

7. Transmission system using a bus which interconnects a plurality of equipments (4, 5A to 5E) needing to communicate with each other using cells obtained by grouping together octets of isochronous or asynchronous transmission channels and which comprise "p" time-division multiplex links (8₁ to 8ₚ) to which each equipment is connected, each equipment comprising means for transmitting in succession on the bus link which is subject to contention during one of the successive contention phases in which that equipment participates the bits constituting a contention resolution module structured identically for all the equipments and made up of at least one element representative of a given level of priority corresponding to that of the equipment for the contention in progress and receive comparator means interrupting transmission of these bits by the equipment in response to detection on the link concerned of a bit different from that which the equipment attempted to transmit, the equipment that is not interrupted during a contention temporarily retaining the link exclusively to transmit a cell, characterised in that it includes clock means (12) for each equipment which control all the links from a common clock (H) and which assign offset clock times for transmitting bits on each of the various links, including contention module bits, to limit contentions between the same equipments to one link at a time.

8. Transmission system according to claim 7 characterised in that each equipment comprises at its electrical bus interface (10, 13) address generator means connected to the various bus links and adapted to transmit selectively and serially at least the address of at least one destination equipment on one only of the links to which they are temporarily dedicated together with means for recognising the physical and/or logical address assigned to the equipment received on any bus link.
